# EUROPEAN PATENT APPLICATION

(11) **EP 2 878 924 A1**
(43) Date of publication of application: **03.06.2015**
(21) Application number: 14193948.8
(22) Date of filing: 19.11.2014
(51) Int. Cl.: G01C 21/20

(54) **Method and system for automatically generating location signatures for positioning using inertial sensors**

(30) Priority: 27.11.2013 US 201314092649
(71) Applicant: InvenSense, Inc., San Jose, CA 95110 (US)
(72) Inventor: Bakshi, Rahul, San Jose, CA California 95110 (US); Heshmati, Ardalan, San Jose, CA California 95110 (US)
(74) Representative: Smith, Jeremy Robert

(57) **Abstract**

A device, method and computer readable medium is disclosed for generating a plurality of location signature is disclosed. The method includes seeding a device with an initial position and utilizing an inertial positioning system to propagate user position, and generating location signatures.

## Description

### FIELD OF THE INVENTION

The present invention is directed generally to inertial sensors and more particularly using such inertial sensors for determining location signatures using such sensors.

### BACKGROUND

It is desirable to significantly reduce the level of effort in generating and maintaining indoor and outdoor location determination for a location signature database, such as used with wifi-based location fingerprinting methods. Conventionally, a resource intensive process is required to manually survey an area to determine Wi-Fi capability within the area.

To manually survey an area is expensive, time consuming and not always exhaustive. In addition the fingerprint signature can change over time. For example the addition or removal of Wi-Fi access points (APs), beacons, change in magnetic anomalies, may cause a change in signature. Finally, the conventional process requires relatively expensive equipment that may not be easily accessible.

Accordingly what is desired is a system and method that overcomes the above identified issues. The system and method must be cost effective, easy to implement and adaptable to existing environments over time. The present invention addresses such a need.

### SUMMARY

A device, method and computer readable medium is disclosed for generating a plurality of location signatures. The method includes seeding a device with an accurate initial position and utilizing an inertial positioning system for generating accurate location signatures based on the initial position.

### BRIEF DESCRIPTION OF THE DRAWINGS

Fig. 1 shows a motion tracking system, in accordance with an embodiment of the invention.
Figs. 2a through 2e show exemplary applications of the system, in accordance with various embodiments of the invention.
Figures 3a-3d illustrate the operation of a system in accordance with the present invention in a predetermined area.
Figure 4 is a block diagram of one embodiment of a system n accordance with the present invention.

### DETAILED DESCRIPTION

The present invention is directed generally to inertial sensors and more particularly using such inertial sensors for determining location signatures using such sensors. The following description is presented to enable one of ordinary skill in the art to make and use the invention and is provided in the context of a patent application and its requirements. Various modifications to the preferred embodiments and the generic principles and features described herein will be readily apparent to those skilled in the art. Thus, the present invention is not intended to be limited to the embodiments shown, but is to be accorded the widest scope consistent with the principles and features described herein.

In the described embodiments, a motion tracking device also referred to as Motion Processing Unit (MPU) includes at least one sensor in addition to electronic circuits. The sensors, such as the gyroscope, the magnetometer, the accelerometer, microphone, pressure sensors, proximity, ambient light sensor, among others known in the art, are contemplated. Some embodiments include accelerometer, gyroscope, and magnetometer, which each provide a measurement along three axes that are orthogonal relative to each other, referred to as a 9-axis device. Other embodiments may not include all the sensors or may provide measurements along one or more axis. The sensors are formed on a first substrate. Other embodiments may include solid-state sensors or any other type of sensors. The electronic circuit in the motion tracking device receives measurement outputs from the one or more sensors. In some embodiments, the electronic circuit processes the sensor data. While in other embodiments, the sensor data is processed on a processor on a different chip. The electronic circuit is implemented on a second silicon substrate. The first substrate is vertically stacked, attached and electrically connected to the second substrate in a single semiconductor chip. In the described embodiments, an inertial positioning system comprises of a processor, sensors such as accelerometers, gyroscopes, pressure sensors, magnetometers and plurality of other sensors either individually or in any combination thereof, to calculate the position, orientation, velocity, direction and speed of movement and other motion and attitude characteristics of an object with or without the need for external references.

In the described embodiments, "raw data" refers to measurement outputs from the sensors which are not yet processed. "Motion data" refers to processed sensor data. Processing may include applying a sensor fusion algorithm or applying any other algorithm. In the case of the sensor fusion algorithm, data from one or more sensors are combined to provide an orientation of the device. In an embodiment, orientation includes heading angle and/or confidence value. In the described embodiments, a MPU may include processors, memory, control logic and sensors among structures. In the described embodiments, predefined reference in world coordinates refers to a coordinate system where one axis of the coordinate system aligns with the earth's gravity, a second axis of the coordinate system coordinate points towards magnetic north and the third coordinate is orthogonal to the first and second coordinates.

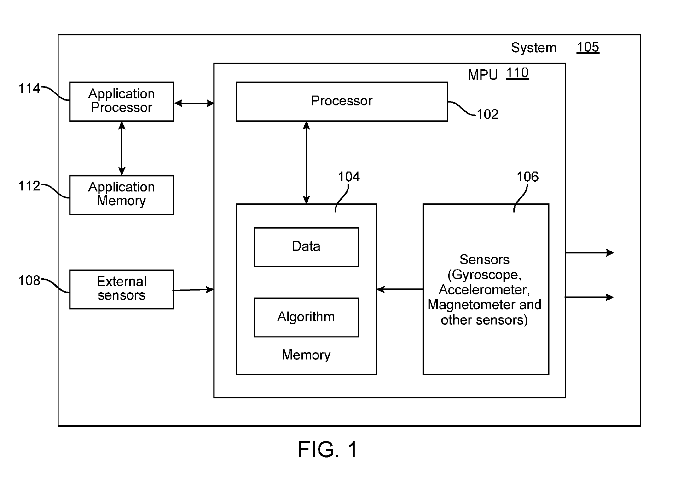

Fig. 1 shows a motion tracking system 105, in accordance with an embodiment of the invention. The system 105 is shown to include a Motion Processing Unit (MPU) 110, an application processor 114, an application memory 112, and external sensors 108. In an embodiment, MPU 110 includes processor 102, memory 104, and sensors 106. The memory 104 is shown to store algorithm, raw data and/or processed sensor data from the sensors 106 and/or the external sensors 108. In an embodiment, sensors 106 include accelerometer, gyroscope, magnetometer, pressure sensor, microphone and other sensors. External sensors 108 may include accelerometer, gyroscope, magnetometer, pressure sensor, microphone, proximity, haptic sensor, and ambient light sensor among others sensors.

In some embodiments, processor 102, memory 104 and sensors 106 are formed on different chips and in other embodiments processor 102, memory 104 and sensors 106 reside on the same chip. In yet other embodiments, a sensor fusion algorithm that is employed in calculating the orientation is performed externally to the processor 102 and MPU 110. In still other embodiments, the sensor fusion and confidence interval is determined by MPU 110.

In an embodiment, the processor 102 executes code, according to the algorithm in the memory 104, to process the data in the memory 104. In another embodiment, the application processor sends to or retrieves from application memory 112 and is coupled to the processor 102. The processor 102 executes the algorithm in the memory 104 in accordance with the application in the processor 114. Examples of applications are as follows: a navigation system, compass accuracy, remote control, 3-dimensional camera, industrial automation, or any other motion tracking application. In the case of the 3-dimensional application, a bias error or sensitivity error is estimated, by the processor 102. It is understood that this is not an exhaustive list of applications and that others are contemplated.

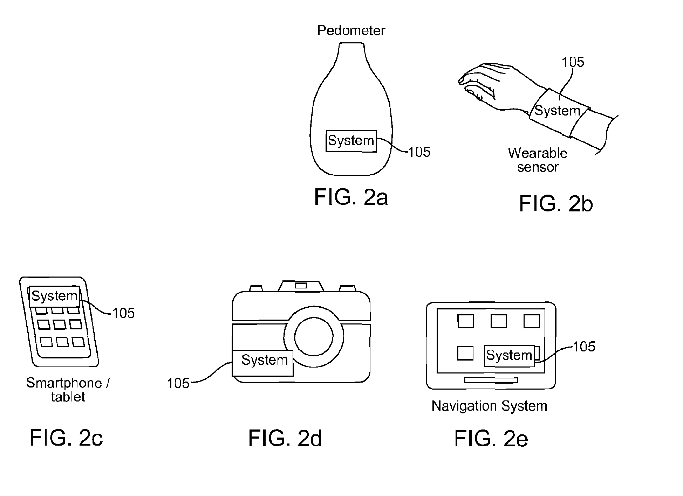

Figs. 2a through 2e show exemplary applications of the system 105, in accordance with various embodiments of the invention for determining location signatures using such sensors. In Fig. 2a, a pedometer is shown to include the system 105 for calculating the orientation of the pedometer. Fig. 2b shows a wearable sensor on a user's wrist with the wearable sensor employing the system 105. In some embodiments, the wearable sensor can be worn on any part of the body. System 105 calculates the orientation of the wearable sensor. In Fig. 2c, a smartphone/tablet is shown to employ the system 105. The system 105 calculates the orientation, such as for global positioning applications, of the smartphone/tablet. Fig. 2d shows a 3-dimentional camera employing the system 105 for calculating the orientation of the camera. Fig. 2e shows a navigation system employing the system 105 for calculating the orientation of the navigation system. It is understood that the applications of Figs. 2a-2e are merely examples of a list of others that is too exhaustive to enumerate.

A system and method in accordance with an embodiment may use devices capable of both Wi-Fi and inertial navigation to provide a plurality of location signatures for providing a plurality of fingerprints for an area. What is meant by location signatures are indications of where a Wi-Fi hotspot is located in a predetermined area. Location signatures include but are not limited to radio frequency signatures such as Bluetooth, radio frequency identification (RFID), Wi-Fi, Bluetooth beacons mapping or the like. It would include unique identification from multiple transmitter along with corresponding signal strength measurement at a given location. Location signatures can also include magnetic signatures that indicate a strength or magnetic field for a given location. Such a system and method require only a minimal location initialization of the device and a density of location signatures can be gathered using inertial navigation.

Thereafter, the location signatures can be provided to databases which can provide subsequent location to a device to generate new location signatures or fingerprints. Hence a fingerprint database can be updated on a regular basis to reflect a changing environment within a particular area.

Embodiments described herein can take the form of an entirely hardware implementation, an entirely software implementation, or an implementation containing both hardware and software elements. Embodiments may be implemented in software, which includes, but is not limited to, application software, firmware, resident software, microcode, etc.

The steps described herein may be implemented using any suitable controller or processor, and software application, which may be stored on any suitable storage location or computer-readable medium. The software application provides instructions that enable the processor to cause the receiver to perform the functions described herein.

Furthermore, embodiments may take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

The medium may be an electronic, magnetic, optical, electromagnetic, infrared, semiconductor system (or apparatus or device), or a propagation medium. Examples of a computer-readable medium include a semiconductor or solid state memory, magnetic tape, a removable computer diskette, a random access memory (RAM), a read-only memory (ROM), a rigid magnetic disk, and an optical disk. Current examples of optical disks include DVD, compact disk-read-only memory (CD-ROM), and compact disk - read/write (CD-R/W). To describe the features of the present disclosure in more detail refer now to the following description in conjunction with the accompanying Figures.

To describe the features of the present invention in more detail refer now to the following description in conjunction with the accompanying Figures. In an embodiment a user position is seeded with existing *accurate* wireless location. Thereafter a location derived from inertial sensors is utilized to provide additional location signatures as the device user moves within the area. The location signatures are captured and provided to a database. These steps are repeated as long as a position of a device is within a specified accuracy limit. The specified accuracy limit can be changed or adjusted depending on the targeted use-case.

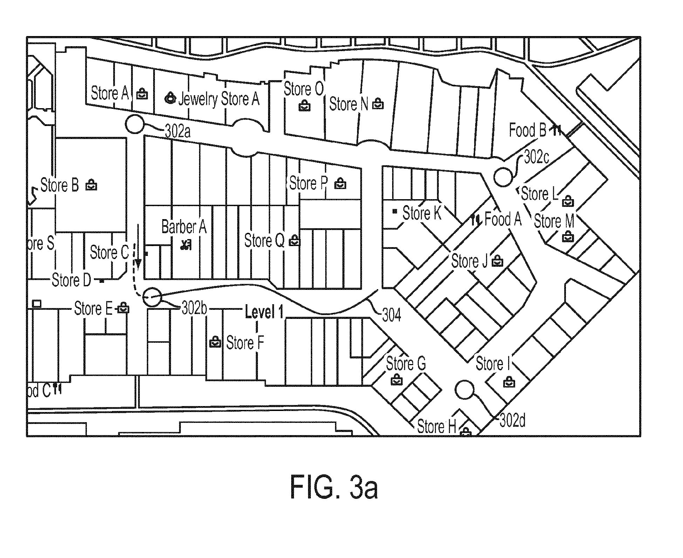

Figures 3a-3d illustrate the operation of a system in accordance with the present invention in a predetermined area. The predetermined area can be a shopping mall (either indoor or outdoor). It could be an office building, a residential area, airport or any building. The only requirement is that there are devices throughout the area that can provide Wi-Fi or other RF signals.

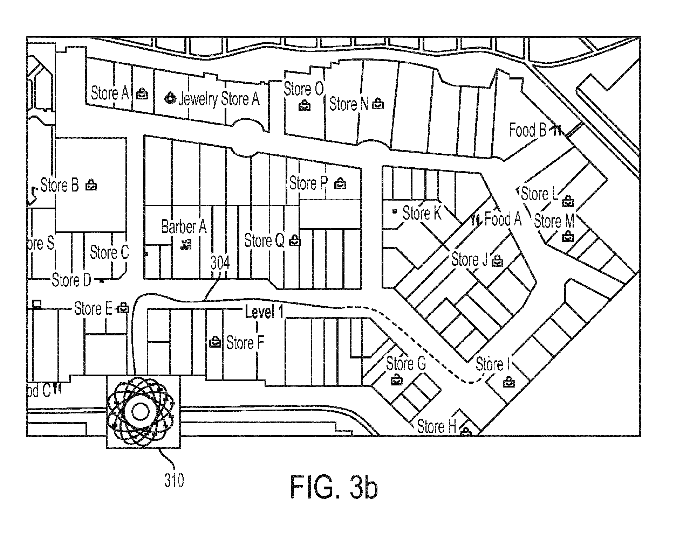

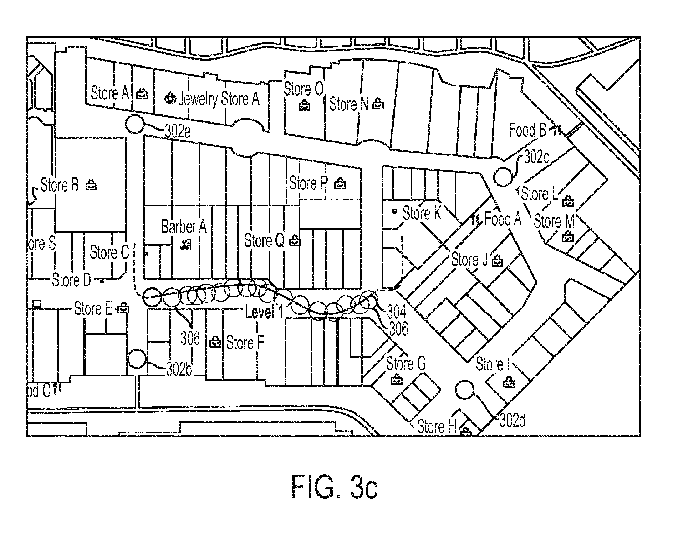

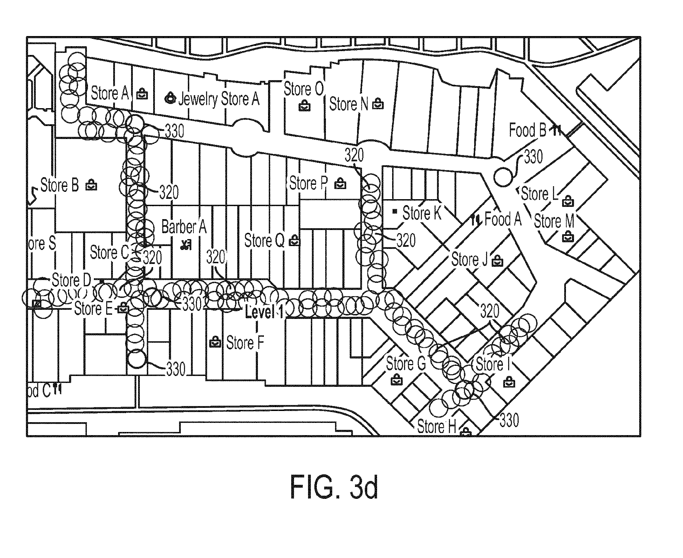

Figure 3a shows an area that includes four available Wi-Fi locations 302a-302d. One of ordinary skill in the art readily recognizes that there could be any number of Wi-Fi locations and that number would be within the spirit and scope of the present invention. Accordingly, initially a user provides a device near Wi-Fi location 302b as indicated by the dotted line where the Wi-Fi location and potentially other location signatures that have been previously collected are utilized to initialize device's position and initiate the dead reckoning (DR) of the device. The initialization as described in more detail hereinafter can be provided externally to a device or in the alternative can be provided by an internal mechanism within the device. This internal mechanism can include for example a GPS system 310 as shown in Figure 3b. Other internal mechanisms for providing the initialization include but are not limited to: any combination of satellite navigation systems, near-field proximity sensing, optical image/proximity sensing. Referring back to Figure 3a, a solid line provides an indication of a path 304 that can be followed that will provide a high accuracy dead reckoning of the device that will provide accuracy fingerprints. Figure 3c illustrates creating new accurate location signatures 306 along the path 304. Figure 3d illustrates that the same environment where a plurality of devices can be crowd sourced to obtain crowd sourced location signatures 320 from the initial surveyed plurality of location signatures 330. To illustrate the overall system that can provide the system as described above refer now to the following description in conjunction with the accompanying figures.

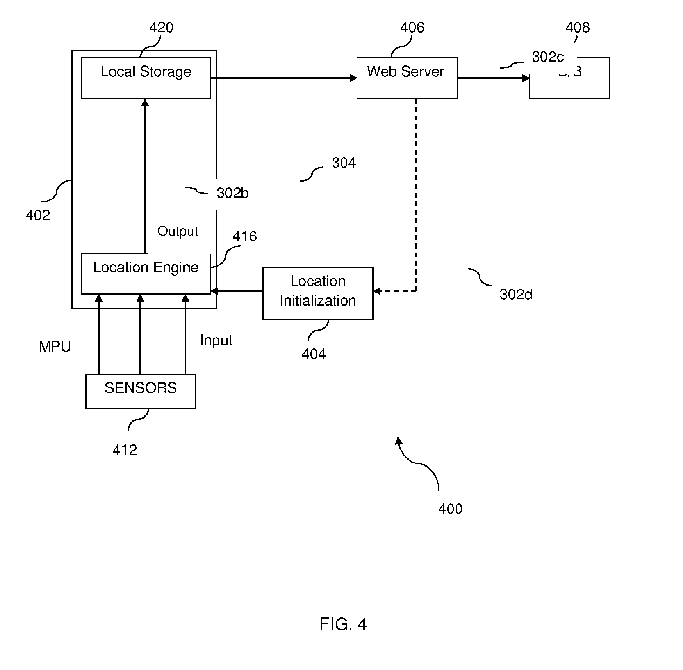

Figure 4 is a block diagram of one embodiment of a system 400 in accordance with the present invention. The system 400 includes a motion tracking device which is in communication with a server 406. The server 406 is in communication with a database 408. Location initialization system 404 which could be within the device 402 or could be located on the server 406 is in communication therebetween. In an embodiment, sensors 412 are in communication with a location engine 416. The sensors 412 could include accelerometer, gyroscope, magnetometer, pressure sensor, microphone, Global Navigation Satellite System(GNSS) receiver, and other sensors; proximity, haptic sensor, and ambient light sensor among others sensors. In an embodiment, sensors 412 and location engine 416 comprises an inertial positioning system. In another embodiment, sensors 412, local storage 420, and location engine 416 comprises an inertial positioning system. In an embodiment, some sensors may be internal to the device 402, and some sensors may be external. In another embodiment the sensors 412 could internal to the device 402. Finally in another embodiment, all of the sensors could be external to the device.

In an embodiment, the location engine 416 receives initialization information from the location initialization module 404, and provides dead reckoning (DR) outputs along with snapshots of location signatures to local storage 420. The local storage 420 is in communication with the server 406. All of the elements of the system 400 could be on one device or could be partitioned. For example the server 406 and/or database 408 could be located within the device 402 or the server 406 and database 408 could be located on cloud storage.

In operation the location engine 416 of the motion tracking device 402 is initialized via the location initialization module 404. The location initialization module as before mentioned can reside within the device 402 or can reside within the server 406. Thereafter the location engine 416 provides the DR output of one or more location signatures. As before mentioned the one or more location signatures can be radio frequency (RF) signatures such as Wi-Fi, Bluetooth, Bluetooth Low Energy, Near Filed Communication (NFC), Cell-ID, or Global Navigation Satellite System (GNSS) or the like. In another embodiment, the location signatures could be signatures that are indication of magnetic field strength of a hotspot or the like. These magnetic signatures can be utilized to provide location information.

In an embodiment, new location signatures are then provided to the local storage 420. The location signatures are then pushed from the local storage 420 to the server 406 and then to the database 408. Thereafter the location initialization module 404 is seeded with the new location signatures for the same or another device. The new location signatures can then be provided to the location engine 416 to provide more accurate subsequent device location using the WiFi fingerprinting method.

Seeding of location is defined as initializing or updating the Inertial Positioning System with an estimate of current location and typically, uncertainty associated with it. The seeding can be performed by an individual device or can be performed in a crowd sourced manner. That is, the location signatures are received from a plurality of devices at a same location. In an embodiment, the location signatures are aggregated and normalized from multiple devices and redistributed to devices to determine the location of the hotspots. The multiple devices or users may or may not have contributed to the aggregation for the purpose of user location determination. Thereafter the above described process can be utilized to benefit devices or users in obtaining more accurate wifi-based location even without their contribution to the location signature aggregation process.

A system and method in accordance with an embodiment can utilize device position derived exclusively with inertial sensors to automatically generate a database of location signatures to provide a plurality of fingerprints, can update a database as the environment changes and can utilize a database to seed a user position and subsequently generate new location signatures. The generation of new location signatures can be crowd sourced. In addition, the generation of the location signatures can be performed using inexpensive equipment such as mobile phones, tablets, laptops, portable devices and the like.

Although the present invention has been described in accordance with the embodiments shown, one of ordinary skill in the art will readily recognize that there could be variations to the embodiments and those variations would be within the spirit and scope of the present invention. Accordingly, many modifications may be made by one of ordinary skill in the art without departing from the spirit and scope of the present invention.

## Claims

1. A method comprising:
seeding one or more devices with an initial position; and
utilizing an inertial positioning system within one of the one or more devices for generating location signatures based on the initial position.

2. The method of claim 1, wherein the location signatures includes any of radio frequency (RF) signatures or magnetic signatures.

3. The method of claim 1 further comprises storing the location signatures on a database.

4. The method of claim 1 further comprises providing the location signatures to the device and repeating the utilizing step until a user location is determined from the location signatures.

5. The method of claim 3, wherein the database is cloud storage.

6. The method of claim 1, wherein the seeding is performed utilizing one or more RF signatures.

7. The method of claim 6, wherein the one or more RF signatures are any combination of Wi-Fi, Bluetooth, Bluetooth Low Energy, or Global Navigation Satellite System (GNSS).

8. The method of claim 1, wherein the inertial positioning system comprises of a processor and any or any combination of gyroscope, accelerometer, magnetometer, pressure sensor, proximity, haptic, ambient light, and microphone.

9. The method of claim 1, wherein the seeding is performed utilizing one or more magnetic signatures.

10. The method of claim 3, wherein the database resides on at least one of the one or more devices.

11. The method of claim 1, wherein the location signatures are received from a plurality of devices for a location.

12. The method of claim 3, wherein the seeding is provided from the database.

13. The method of claim 1, wherein the location signatures are aggregated and normalized from multiple devices and redistributed to devices to determine a location of Wi-Fi hotspots.

14. A computer program product containing a computer readable medium, the computer readable medium including program instructions for:
seeding one or more devices with an accurate initial position; and
utilizing an inertial positioning system for generating accurate location signatures based on the initial position.

15. The computer program product of claim 14, wherein the location signatures includes any of radio frequency (RF) signatures or magnetic signatures.

16. The computer program product of claim 14 further comprises storing the location signatures in a database.

17. The computer program product of claim 14 further comprises providing the location signatures to the one or more device and repeating the utilizing step until a user location is determined from the accurate location signatures.

18. The computer program product of claim 16, wherein the database is stored in cloud.

19. The computer program product of claim 14, wherein the seeding is performed utilizing one or more RF signatures.

20. The computer program product of claim 19, wherein the one or more RF signatures are any of Wi-Fi, Bluetooth, Bluetooth Low Energy, or Global Navigation Satellite System (GNSS).

21. The computer program product of claim 14, wherein the inertial positioning system comprises of a processor and any or any combination of gyroscope, accelerometer, magnetometer, , pressure sensor, microphone, haptic, proximity, and ambient light sensor.

22. The computer program product of claim 14, wherein the seeding is performed utilizing one or more magnetic signatures.

23. The computer program product of claim 16, wherein the database is on at least one of the one or more devices.

24. The computer program product of claim 14, wherein the location signatures are received from a plurality of devices for a same location.

25. The computer program product of claim 14, wherein the seeding is provided from the database.

26. The computer program product of claim 14, wherein the location signatures are aggregated and normalized from multiple devices and redistributed to devices to determine the location of Wi-Fi hotspots.

27. A device comprising:
a processor;
memory in communication with the processor; wherein the memory includes an algorithm; an internal positioning system for providing data to the memory; and
wherein the processor executes the algorithm; wherein the algorithm includes program instructions for executing the data in the memory, the program instructions comprise seeding the device with an accurate inertial position; and utilizing the inertial positioning system for generating accurate location signatures.

28. The device of claim 26, wherein the location signatures includes any of RF signatures or magnetic signatures.

29. The device of claim 28, wherein the one or more RF signatures are any of Wi-Fi, Bluetooth, Bluetooth Low Energy, or Global Navigation Satellite System (GNSS).

30. The device of claim 26, wherein the inertial positioning system is any or any combination of gyroscope, accelerometer, magnetometer, motion processing unit, pressure sensor.
